# EUROPEAN PATENT SPECIFICATION

(11) **EP 1 408 648 B1**
(45) Date of publication and mention of the grant of the patent: **28.07.2010**
(21) Application number: 02257491.7
(22) Date of filing: 29.10.2002
(51) Int. Cl.: H04W 12/08, H04W 12/02, H04L 29/06

(54) **Wireless LAN access point, method for providing wireless LAN services, and program for providing wireless LAN services**
Wireless-LAN-Zugangspunkt sowie Verfahren und Programm zur Bereitstellung von Wireless-LAN-Diensten
Procédé et programme pour fournir des services de réseau local sans fil et point d'accès de réseau local sans fil

(30) Priority: 10.10.2002 JP 2002297496
(43) Date of publication of application: 14.04.2004
(73) Proprietor: Buffalo Inc., Nagoya-shi, Aichi 457-8520 (JP)
(72) Inventor: Ishidoshiro, Takashi, Melco Inc., Nagoya-shi, Aichi 457-8520 (JP)
(74) Representative: Sturt, Clifford Mark

(56) References cited:
- SIKORA A: "SICHERHEIT IN WIRELESS LANS" ELEKTRONIK, WEKA FACHZEITSCHRIFTENVERLAG, POING, DE, vol. 51, no. 18, 3 September 2002 (2002-09-03), pages 44-52, XP001122958 ISSN: 0013-5658

## Description

### BACKGROUND OF THE INVENTION

### 1. Field of the invention:

The present invention relates to an access point for wireless LAN, a method for providing wireless LAN services, and a medium storing a program to provide wireless LAN services.

### 2. Description of the prior art:

It is a recent practice to connect LAN to WAN in order for users not only to hold in-house data in common but also to access the internet (WAN outside the company) as the occasion may demand. This serves the convenience of users.

On the other hand, the recent development of wireless LAN systems permits any user to easily join the network system when he is in a communication area. There are some institutions which, as their services, allow their customers to connect to the outside WAN through their internal LAN. In this case, it is necessary to prevent customers from unlimitedly accessing the in-house LAN which needs a high degree of secrecy although customers may be allowed to access the outside WAN which is not so serious about secrecy.

A conventional way to limit accessing is to use the MAC address or encryption by WEP. The former is achieved by registering the MAC address of the machines connected to the in-house LAN, thereby determining whether or not a customer may access for each MAC address. The latter is achieved by registering the key for a series of specific characters, thereby encrypting the customer's communication by means of the key and substantially limiting the customer's accessing.

The above-mentioned conventional wireless LAN access point has the following problem. In the former case (limiting by the MAC address), it is necessary to register the MAC address for each machine possessed by customers, even through customers are allowed to access the outside WAN unlimitedly. This needs cumbersome works. In the latter case (which uses WEP), it is necessary to inform customers of the highly secret key.

A Sikora, "Sicherheit in Wireless LANs", Elektronik, Weka Fachzeitsehriftenverlag, Poing, DE, vol. 51, no. 18, 3/9/2002, p. 44-52 discloses providing access to a network using two logical ports assigned to a single physical connection. One of the ports is uncontrolled and the other is controlled, access to the controlled port requiring authentication.

### SUMMARY OF THE INVENTION

The present invention was completed in view of the foregoing. It is an object of the present invention to provide a wireless LAN access point which permits easy connection to the external WAN but can limit connection to the internal LAN, a method for proving wireless LAN services, and a medium storing a program to provide wireless LAN services.

According to a first aspect of the present invention, there is provided a wireless LAN access point adapted to provide network services through wireless signals, to establish an in-house LAN as an access-limited area and an outside WAN as an access-unlimited area, and to limit access using encryption, said wireless LAN access point comprising an encryption judging means adapted to judge whether or not an encryption effective for communication with the access point is present in a data-link layer in an access demand and characterised by an access object limiting means adapted to allow access to the LAN and the WAN when said encryption judging means judges that said encryption effective for communication with the access point is present and also to allow access only to the WAN when said encryption judging means judges that said encryption effective for communication with the access point is not present.

It is assumed that the wireless LAN access point of the present invention, which is constructed as mentioned above, can provide network services through wireless signals, establish a LAN as an access-limited area and a WAN as an access-unlimited area, and limit access by appropriate encryption.

The encryption judging means judges whether or note there is said encryption in access demand. When the encryption judging means judges the presence or absence of encryption in access demand, the access object limiting means carries out the following process. If there is encryption, it allows access to both the LAN and the WAN. If there is not encryption, it allows access only to the WAN.

In this way it is possible to limit access without necessitating the registration of MAC address and disclosing the key for encryption.

As mentioned above, the wireless LAN access point of the present invention allows access to the LAN or the WAN in accordance with only the presence or absence of encryption. Therefore, it permits unspecified persons very easily to access the WAN.

The wireless LAN access point is constructed such that said encryption judging means is adapted to judge whether or not there is encryption in the data link layer in the access demand.

If the wireless LAN access point is constructed as mentioned above, encryption is accomplished in the data link layer and hence it is possible to judge the presence or absence of encryption regardless of the protocol in the upper layer.

By using encryption in the data link layer in this way it is possible to provide services regardless of the protocol in the upper layers.

In addition, the wireless LAN access point may be constructed such that said encryption is accomplished in conformity with WEP.

If the wireless LAN access point is constructed as mentioned above, WEP is used for encryption in place of any other special method.

In this way it is possible to use the wireless LAN access point in any wireless LAN system that employs WEP.

If the wireless LAN access point is constructed as mentioned above, it does not limit access to a large-scale WAN such as the internet.

The technique of limiting what to access in accordance with the presence or absence of encryption is not necessarily restricted by tangible devices; but it is easily understood that the technique may manifest itself as a method.

According to a second aspect of the present invention, there is provided a method of providing network services through wireless signals, establishing an in-house LAN as an access-limited area and an outside WAN as an access-unlimited area, and limiting access using encryption, said method comprising an encryption judging step of judging whether or not an encryption effective for communication with the access point is present in a data-link layer in an access demand and being characterised by an access object limiting step of allowing access to the LAN and the WAN when said encryption judging step judges that said encryption effective for communication with the access point is present and allowing access only to the WAN when said encryption judging step judges that said encryption effective for communication with the access point is not present.

In other words, the present invention is directed a tangible device as well as a method for using it.

The wireless LAN access point of the present invention may exist alone or may be incorporated into a certain machine. The concept of the present invention may embrace various embodiments; it may be either software or hardware.

In the case where the concept of the present invention is embodied in software for the wireless LAN access point, it naturally exists in the form of a recording medium which stores such software and it is used as software.

According to a third aspect of the present invention, there is provided a computer program for permitting a computer to realise the method described above.

Needless to say, the recording medium may be a magnetic recording medium or a magneto-optical recording medium or any one which would be developed in the future. It also includes primary and secondary duplicates in any form.

In addition, the concept of the present invention may be realized partly in the form of software and partly in the form of hardware. Alternatively, it may exist in such a form that a portion is recorded on a recording medium and read time to time as occasion demands.

### BRIEF DESCRIPTION OF THE DRAWINGS

Fig. 1 is a schematic diagram showing the construction of the network system to which is applied the wireless LAN access point pertaining to one embodiment of the present invention.
Fig. 2 is a block diagram showing the construction of the wireless LAN access point.
Fig. 3 is a flowchart showing the processing at the wireless LAN access point.
Fig. 4 is a flowchart showing another example of the processing at the wireless LAN access point.

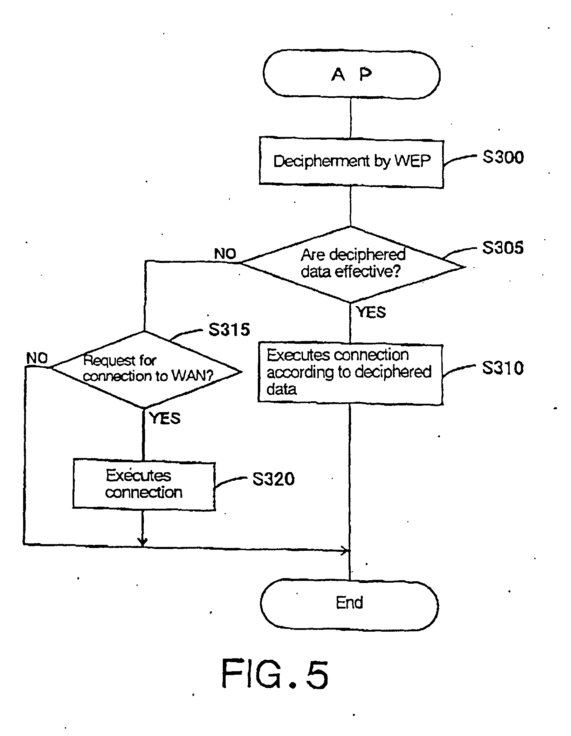

Fig. 5 is a flowchart showing a modified example of processing at a wireless LAN access point provided as background art only.
Fig. 6 is a flowchart showing a modified example of the processing at the wireless LAN access point conforming to general-purpose encryption.

### DESCRIPTION OF THE PREFERRED EMBODIMENTS

The embodiments of the present invention will be described with reference to the accompanying drawings.

### (1) The first embodiment:

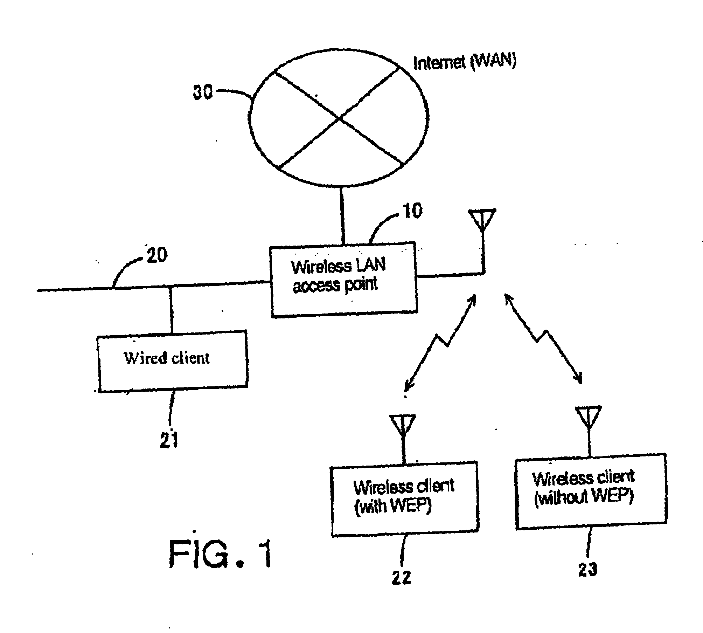

Fig. 1 is a schematic diagram showing the construction of the network system to which is applied the wireless LAN access point pertaining to one embodiment of the present invention. In this embodiment, the network is a wireless LAN and a wired LAN in a company and is capable of accessing the outside internet.

In Fig. 1, the wireless LAN access point 10 is connected to the in-house LAN 20 and the internet (WAN) 30 through cables. To the in-house LAN 20 is connected the wired client 21 through a cable as well as the wireless client 22 through the wireless LAN access point 10. The wireless LAN access point 10 is physically capable of connecting to the wireless client 23; however, the wireless LAN access point 10 and the wireless client 22 have the common "key" for WEP. Thus there is a connecting environment with encryption by WEP. By contrast, the wireless client 23 does not have the common "key" for WEP.

In other words, the wireless client 22 is a terminal for an inside person who can teach the key of WEP, whereas the wireless client 23 is a terminal which allows access to only the outside internet through the in-house wireless infrastructure.

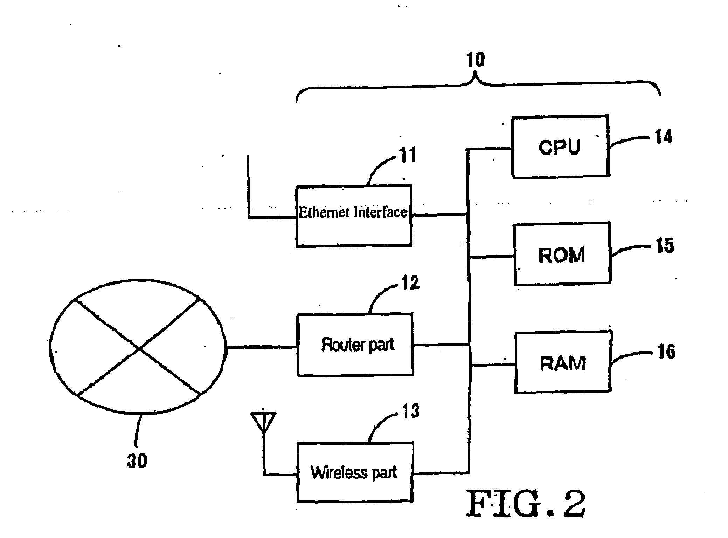

Fig. 2 is a block diagram showing the construction of the wireless LAN access point 10.

This wireless LAN access point 10 has three interfaces, that is, the Ethernet interface 11 capable of connecting to a network environment of Ethernet; the router part 12 for connection to the outside internet through an optical cable in the wired environment; and the wireless part 13 capable of network connection to outside wireless terminals through the wireless medium. It also has a CPU 14, ROM 15, and RAM 16. The CPU 14 reads firmware and data written in the ROM 15 and accesses the RAM 16 time to time to store data temporarily, thereby mediating communications between network machines connected through the interface.

These interfaces can be realized with existing circuits based on general-purpose technologies. The wireless part 13 is suitable for data transmission ciphered by WEP.

The WEP converts a 5-byte or 13-bit character string (key) into a hexadecimal number and uses a 64-bit or 128-bit long value (with a 24-bit initializing vector) as a stream cipher.

The initializing vector is a numerical value which serves as the base of a random number sequence, and a 64-bit or 128-bit long value forms a random number sequence. The XOR operation is performed on this random number sequence and the "original text" (data) and the resulting cipher text is transmitted in the form of stream cipher. Decipherment is accomplished by performing the XOR operation again on the "cipher text" by using the 64-bit or 128-bit long value generated by the same "key" as used for encipherment. Thus it is possible to obtain the "original text" as data.

This WEP sets up the "key" at the access point and tells it only to those who are allowed to connect to the in-house LAN (access-limited area), so that only the terminal which has set up the "key" can access the access-limited area.

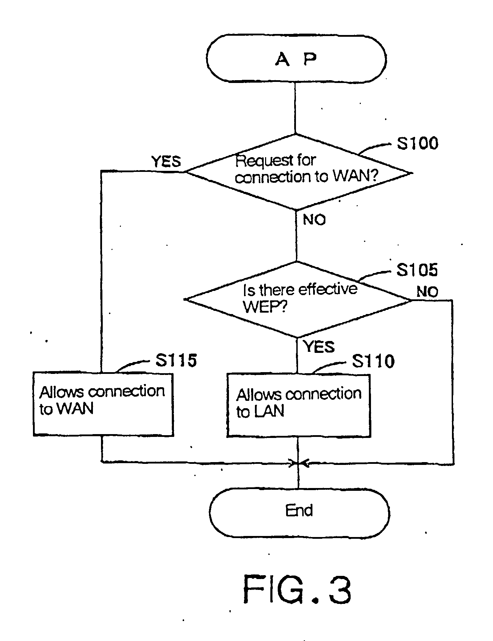

Fig. 3 is a flowchart showing the processing at the wireless LAN access point which is executed when the wireless clients 22 and 23 issued a request for connection to the wireless LAN access point.

In step S100, a judgment is made as to whether the request for connection is the one for WAN 30 or the one for in-house LAN 20. If the request for connection is the one for in-house LAN 20 instead of the one for WAN 30, then a judgment is made (in step S105) as to whether it is accompanied by encryption by effective WEP. If WEP is effective, connection to in-house LAN 20 is allowed in step S110, and if WEP is not effective, connection to in-house LAN 20 is not allowed, and the subsequent processes are omitted.

On the other hand, if the request for connection is the one for WAN 30, connection to WAN 30 is allowed in step S115 regardless of the presence or absence of encryption by WEP.

The following explains the action of the embodiment constructed as mentioned above.

Referring to Fig. 1, it is assumed that the wireless client 22 is going to connect to in-house LAN 20 through the wireless LAN access point 10. Since the request for connection from the wireless client 22 to the wireless LAN access point 10 is the one for in-house LAN 20, a judgment is made in step S100 that it is "not the request for connection to WAN" and then a judgment is made in step S105 as to whether it is accompanied by an effective WEP. Since the wireless client 22 is an in-house terminal, it has the same "key" as that of the wireless LAN access point 10, and a judgment is made that it is accompanied by an effective WEP and connection to in-house LAN 20 is allowed in step S110.

Also, in the case where this wireless client 22 intends to connect to the internet (WAN) through the wireless access point 10, then the request for connection to the wireless LAN access point 10 from the wireless client 22 is the one for WAN 30, a judgment is made in step S100 that "it is the request for connection to WAN" and connection to WAN 30 is allowed in step S115 without inquiring the validity of WEP.

On the other hand, it is assumed that the wireless client 23 temporarily enters the communication range of wireless LAN and is allowed to connect only to the internet. In this case, too, if it is to connect to the internet (WAN) through the wireless LAN access point 10, the request for connection to the wireless LAN access point 10 is the one for connection to WAN 30, and hence a judgment is made (in step S100) that "it is a request for connection to WAN", and connection to WAN 30 is allowed in step S115 without inquiring the validity of WEP. In other words, the arrangement makes it possible to connect to the internet (WAN) very easily from the terminal for which the WEP key has not yet been set up.

By contrast, in the case where the wireless client 23 attempts to access to the in-house LAN 20 (access to which is not yet allowed), the following steps are carried out.

By contrast, if the wireless client 23 attempts to access the in-house LAN 20 access to which is not yet approved, the following steps are taken. That is, it is assumed that the wireless client 23 attempts to connect to the in-house LAN 20 through the wireless LAN access point 10. Since the request for connection to the wireless LAN access point is the request for connection to the in-house LAN 20, a judgment is made in step S100 that it is "not the request for connection to WAN" and a judgment is made in step S105 as to whether it is accompanied by effective WEP.

Since the wireless client 23 is not an in-house terminal, it does not know the "key" of WEP and a judgment is made that it is not accompanied by effective WEP. Connection to the in-house LAN 20 is not allowed in step S110, and the processing terminates. In other words, unless effective encipherment like WEP is accompanied, access to the access-limited area is definitely limited.

### (2) The second embodiment

There are several methods for deciphering the cipher such as WEP. An example of them is explained in the folflowing.

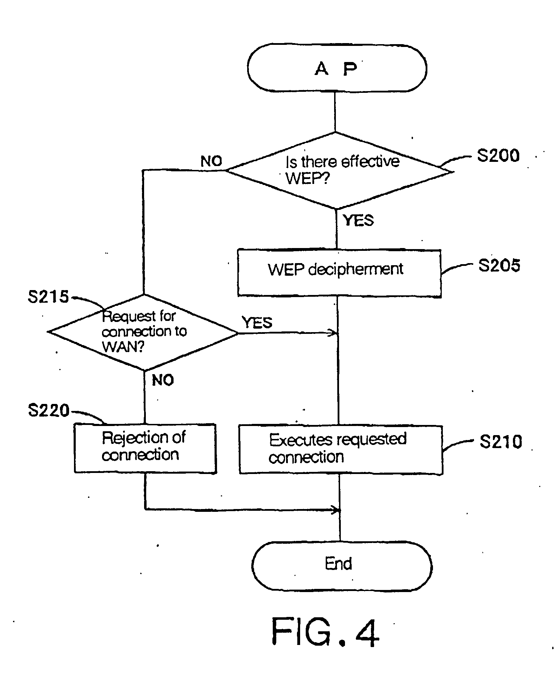

Fig. 4 illustrates the processing in the case where it is possible to previously judge whether or not effective WEP is accompanied.

A judgment is made in step S200 as to whether the request for connection from either the wireless client 22 or 23 is accompanied by effective WEP. If the request for connection from the wireless client 22 is accompanied by effective WEP, the enciphered data is deciphered in step S205. And, the requested connection is executed in step S210 according to the deciphered data. This request for connection may be either the request for connection to the in-house LAN 20 or the request for connection to the WAN 30.

On the other hand, if the request for connection from the wireless client 23 is not accompanied by effective WEP, a judgment is made in step S215 as to whether it is the request for connection to the WAN 30. If the result of judgment is "Yes", the requested connection is executed in step S210. In the case of the request for connection from the wireless client 22, regardless of whether it is a request for connection to the in-house LAN 20 or a request for connection to the WAN 30, it is processed in the same way. However, the request for connection from the wireless client 23 is executed in step S210 only when it is the request for connection to the WAN 30. And, if the request for connection from the wireless client 23 is not a request for connection to the WAN 30, then connection is rejected in step S220.

### (3) The third embodiment:

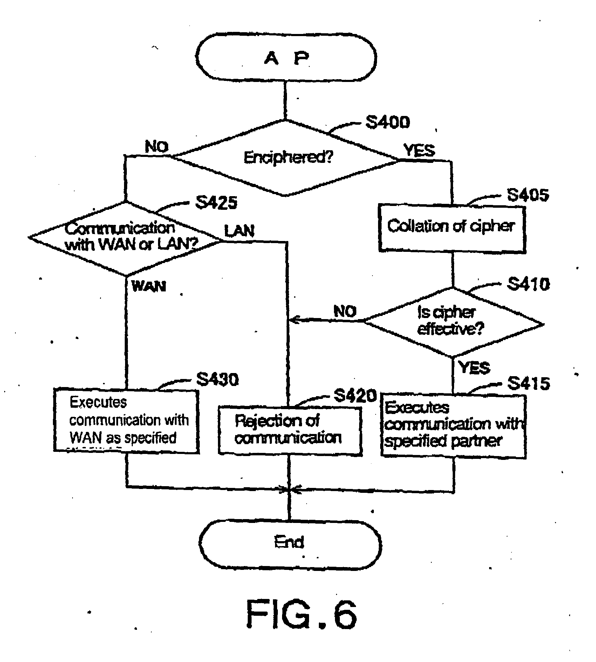

In the above-mentioned embodiments, encipherment is accomplished by WEP; however, it is also possible to accomplish encipherment in other ways. An example is shown in Fig. 6.

In step S400, a judgement is made as to whether or not the data is enciphered. If the result of judgement is affirmative, the cipher is verified in step S405. And, in step S410, a judgement is made as to whether or not encipherment is effective. If the result of judgement is affirmative, communication with the specified partner is executed in step S415. Therefore, in the case where connection is made from an in-house terminal to the wireless LAN access point as mentioned above, effective encipherment is completed and hence communication with the specified partner is executed regardless of the in-house LAN 20 or the internet 30.

Also, in the case where the data is enciphered but the enciphered data is not effective, its validity remains doubtful and hence communication is rejected in step S420 and an appropriate process (such as security alert) is executed.

On the other hand, in the case where a judgment is made (in step S400) that the data is not enciphered, a judgment is made (in step S425) as to whether the communication partner is the WAN 30 or the LAN 20. In this case, the former indicates the access-unlimited area and the latter indicates the access-limited area. And, if it is the WAN which is the access-unlimited area, communication with the specified partner is executed in step S430. However, if it is the LAN which is the access-limited area, communication is rejected in step S420 (in the same way as above) and an appropriate process (such as security alert) is executed.

Therefore, in the case of the wireless client 23 which temporarily enters the communication range of the wireless LAN and is allowed to connect only to the internet, it is not accompanied by encipherment, and communication is executed only if the communication partner is the access-unlimited area (such as internet) and communication is rejected if the communication partner is the access-limited area.

As mentioned above, the present invention produces the following effect. In the case where the access-limited area (such as the in-house LAN 20 access to which should be limited for outside persons) and the access-unlimited area (such as the internet 30 access to which should be allowed for outside persons) are connected through a single wireless LAN access point 10, it is possible to limit connection to the in-house LAN while simply allowing connection to the outside WAN without individual setting for outside persons, because when encipherment such as WEP can be utilized, if there is a request for connection accompanied by effective WEP from the wireless client 22 (who is an insider), connection to both the in-house LAN 20 and the internet 30 is allowed, but if there is a request for connection not accompanied by effective WEP from the wireless client 23 (which is an outsider), connection only to the internet is allowed.

## Claims

1. A wireless LAN access point (10) adapted to provide network services through wireless signals, to establish an in-house LAN (20) as an access-limited area and an outside WAN (30) as an access-unlimited area, and to limit access using encryption, said wireless LAN access point (10) comprising an encryption judging means (14) adapted to judge whether or not an encryption effective for communication with the access point (10) is present in a data-link layer in an access demand and **characterised by** an access object limiting means (14) adapted to allow access to the LAN (20) and the WAN (30) when said encryption judging means (14) judges that said encryption effective for communication with the access point (10) is present and also to allow access only to the WAN (30) when said encryption judging means (14) judges that said encryption effective for communication with the access point (10) is not present.

2. The wireless LAN access point (10) as defined in claim 1, in which said encryption effective for communication with the access point (10) is WEP.

3. A method of providing network services through wireless signals, establishing an in-house LAN (20) as an access-limited area and an outside WAN (30) as an access-unlimited area, and limiting access using encryption, said method comprising an encryption judging step (S105) of judging whether or not an encryption effective for communication with the access point (10) is present in a data-link layer in an access demand and being **characterised by** an access object limiting step (S110, S115) of allowing access to the LAN (20) and the WAN (30) when said encryption judging step (S105) judges that said encryption effective for communication with the access point (10) is present and allowing access only to the WAN (30) when said encryption judging step (S105) judges that said encryption effective for communication with the access point (10) is not present.

4. A computer program for permitting a computer to realise the method of claim 3.

## Patentansprüche

1. Wireless-LAN-Zugangspunkt (10), der dafür geeignet ist, über drahtlose Signale Netzwerkdienste bereitzustellen, ein hausinternes LAN (20) als zugangsbeschränkten Bereich und ein externes WAN (30) als nicht zugangsbeschränkten Bereich einzurichten und unter Anwendung einer Verschlüsselung den Zugang zu beschränken, wobei der Wireless-LAN-Zugangspunkt (10) ein Verschlüsselungsbeurteilungsmittel (14) umfasst, welches dafür geeignet ist, zu entscheiden, ob bei einer Zugangsanforderung in einer Datenverbindungsschicht eine Verschlüsselung für einen Datenaustausch mit dem Zugangspunkt (10) vorliegt oder nicht, und durch ein Zugangsgegenstand-Beschränkungsmittel (14) **gekennzeichnet** ist, welches dafür geeignet ist, den Zugang zu dem LAN (20) und dem WAN (30) zu ermöglichen, wenn das Verschlüsselungsbeurteilungsmittel (14) entscheidet, dass die Verschlüsselung für einen Datenaustausch mit dem Zugangspunkt (10) vorliegt, und auch den Zugang nur zu dem WAN (30) zu ermöglichen, wenn das Verschlüsselungsbeurteilungsmittel (14) entscheidet, dass die Verschlüsselung für einen Datenaustausch mit dem Zugangspunkt (10) nicht vorliegt.

2. Wireless-LAN-Zugangspunkt (10) nach Anspruch 1, wobei es sich bei der Verschlüsselung für einen Datenaustausch mit dem Zugangspunkt (10) um WEP handelt.

3. Verfahren zum Bereitstellen von Netzwerkdiensten über drahtlose Signale, zum Einrichten eines hausinternen LAN (20) als zugangsbeschränkten Bereich und eines externen WAN (30) als nicht zugangsbeschränkten Bereich und zum Beschränken des Zugangs unter Anwendung einer Verschlüsselung, wobei das Verfahren einen Verschlüsselungsbeurteilungsschritt (S105) umfasst, wobei entschieden wird, ob bei einer Zugangsanforderung in einer Datenverbindungsschicht eine Verschlüsselung für einen Datenaustausch mit dem Zugangspunkt (10) vorliegt oder nicht, und durch einen Zugangsgegenstand-Beschränkungsschritt (S110, S115) **gekennzeichnet** ist, wobei der Zugang zu dem LAN (20) und dem WAN (30) ermöglicht wird, wenn in dem Verschlüsselungsbeurteilungsschritt (S105) entschieden wird, dass die Verschlüsselung für einen Datenaustausch mit dem Zugangspunkt (10) vorliegt, und der Zugang nur zu dem WAN (30) ermöglicht wird, wenn in dem Verschlüsselungsbeurteilungsschritt (S105) entschieden wird, dass die Verschlüsselung für einen Datenaustausch mit dem Zugangspunkt (10) nicht vorliegt.

4. Computerprogramm, welches ermöglicht, dass ein Computer das Verfahren nach Anspruch 3 realisiert.

## Revendications

1. Point d'accès de réseau local (LAN) sans fil (10) adapté afin de fournir des services de réseau par l'intermédiaire de signaux sans fil, afin d'établir un LAN en interne (20) comme une zone à accès limité et un WAN extérieur (30) comme une zone à accès illimité, et de limiter l'accès en utilisant un cryptage, ledit point d'accès LAN sans fil (10) comprenant un moyen d'estimation de cryptage (14) adapté afin d'estimer si ou non un cryptage effectif à des fins de communication avec le point d'accès (10) est présent dans une couche de liaison de données dans une demande d'accès et **caractérisé par** un moyen de limitation d'objet d'accès (14) adapté afin d'autoriser l'accès au LAN (20) et au WAN (30) quand ledit moyen d'estimation de cryptage (14) estime que ledit cryptage effectif à des fins de communication avec le point d'accès (10) est présent et aussi afin d'autoriser l'accès uniquement au WAN (30) quand ledit moyen d'estimation de cryptage (14) estime que ledit cryptage effectif à des fins de communication avec le point d'accès (10) n'est pas présent.

2. Point d'accès de réseau local sans fil (10) comme défini à la revendication 1, dans lequel ledit cryptage effectif à des fins de communication avec le point d'accès (10) est WEP.

3. Procédé de fourniture de services de réseau par l'intermédiaire de signaux sans fil, d'établissement d'un LAN en interne (20) comme une zone à accès limité et un d'WAN extérieur (30) comme une zone à accès illimité, et de limitation d'accès en utilisant un cryptage, ledit procédé comprenant une étape d'estimation de cryptage (S105) pour estimer si ou non un cryptage effectif à des fins de communication avec le point d'accès (10) est présent dans une couche de liaison de données dans une demande d'accès et étant **caractérisé par** une étape de limitation d'objet d'accès (S110, S115) permettant l'accès au LAN (20) et au WAN (30) quand ladite étape d'estimation de cryptage (S105) estime que ledit cryptage effectif à des fins de communication avec le point d'accès (10) est présent et permettant l'accès uniquement au WAN (30) quand ladite étape d'estimation de cryptage (S105) estime que ledit cryptage effectif à des fins de communication avec le point d'accès (10) n'est pas présent.

4. Programme informatique permettant à un ordinateur de mettre en oeuvre le procédé selon la revendication 3.
